# FASCICULE DE BREVET EUROPEEN

(11) **EP 0 434 519 B1**
(45) Date de publication et mention de la délivrance du brevet: **21.02.1996**
(21) Numéro de dépôt: 90403590.4
(22) Date de dépôt: 14.12.1990
(51) Int. Cl.: B60N 3/14, F23Q 7/00

(54) **Allume-cigare, notamment pour véhicules automobiles**
Zigarettenanzünder, vorzugsweise für Kraftfahrzeuge
Cigarette lighter, especially for motor vehicles

(30) Priorité: 18.12.1989 FR 8916702
(43) Date de publication de la demande: 26.06.1991
(60) Demande divisionnaire: 94120243.4
(73) Titulaire: VALEO VISION, F-93012 Bobigny Cédex (FR)
(72) Inventeur: Mallet, Christian, F-91490 Milly-La-Foret (FR)
(74) Mandataire: Gamonal, Didier

(56) Documents cités:
- FR-A- 2 436 939
- FR-A- 2 444 587
- US-A- 2 701 297
- US-A- 3 975 619
- US-A- 4 498 726

## Description

La présente invention concerne les allume-cigares, notamment pour véhicules automobiles.

Ainsi qu'on le sait et tel que décrit, par exemple, dans le document US-A-4 500 774 (figure 1) et FR-A-2 436 939, qui est conforme au préambule de la revendication 1, un allume-cigare comporte une bague conductrice de lumière ou bague éclairante, un corps d'allumage pourvu d'un bilame, et un bouchon chauffant amovible logé dans le corps d'allumage.

C'est par l'intermédiaire de la bague éclairante que le corps d'allumage est propre à être fixé à une paroi du véhicule.

Ce corps présente un fond à partir duquel s'érigent en saillie des languettes pour alimentation de l'allume-cigare.

Il est doté également de moyens d'engagement pour coopération avec des moyens d'engagement complémentaires que présente la bague éclairante et attelage à ladite bague.

Pour sa fixation dans une paroi fixe du véhicule, la bague est dotée de moyens de montage pour coopération avec des moyens de montage complémentaires portés par une paroi solidaire du véhicule.

Ainsi usuellement, il faut d'abord monter la bague conductrice dans la paroi, puis enfiler dans celle-ci le corps d'allumage et enfin monter le bouchon chauffant.

Toutes ces dispositions compliquent le montage et il en est d'autant plus ainsi, que la bague conductrice de lumière porte usuellement en saillie un boîtier pour une lampe d'éclairage.

La présente invention a pour objet de pallier ces inconvénients et donc de faciliter le montage de l'allume-cigare dans la paroi du véhicule tout en procurant d'autres avantages.

Ce problème est résolu conformément à l'invention par la partie caractérisante de la revendication 1.

Grâce à l'invention il est possible de former un ensemble unitaire, bouchon chauffant-corps d'allumage-bague d'éclairante et de monter celui-ci dans la paroi du véhicule, l'extrémité libre de la bague venant se monter dans une seconde partie complémentaire du connecteur portée par le véhicule.

On appréciera que la longueur de l'allume-cigare proprement dite n'est pas augmentée, son corps d'allumage pouvant avoir la même dimension, compte tenu qu'on utilise avantageusement l'espace libre au niveau des languettes.

L'extrémité libre s'étend dans l'encombrement radial de la bague et donc dans le contour hors-tout de ladite bague.

De plus la bague joue le rôle d'un capot protecteur pour les languettes d'alimentation et le corps d'allumage. Elle constitue également un isolant électrique.

Avantageusement la bague éclairante peut comporter des moyens de guidage pour coopération avec les moyens de guidage complémentaires portés par la paroi du véhicule.

Il devient même possible de fixer la seconde partie du connecteur dans la paroi du véhicule et ainsi le montage et les connexions peuvent aisément se faire automatiquement de manière robotisée par enfilage.

Il peut être tiré parti de la disposition selon l'invention pour le montage d'une lampe d'éclairage.

En effet, la bague éclairante peut être éclairée indirectement par une source lumineuse, par exemple, à l'aide d'un prisme, mais avantageusement, suivant une caractéristique importante de l'invention, la bague éclairante présente intérieurement au-delà du fond du corps d'allumage et latéralement par rapport à la première partie du connecteur, un logement pour montage d'une lampe d'éclairage.

Grâce à la disposition selon l'invention, conduisant à un allongement de la bague éclairante, il est alors aisément possible de loger la lampe au niveau des languettes d'alimentation, compte tenu de la place disponible, tout en ne nuisant pas au montage de l'allume-cigare, et en augmentant pas l'encombrement diamétral.

En outre l'alimentation de la lampe peut être simplifiée, puisque selon une caractéristique également importante de l'invention elle peut être alimentée à partir d'une languette coopérant avec le corps d'allumage conducteur.

La description qui va suivre, à titre d'exemple, illustre l'invention en référence aux dessins annexés dans lesquels:
- la figure 1 est une vue en perspective d'un allume-cigare selon le brevet US-A-4 500 774;
- la figure 2 est une vue en perspective avec une coupe de la paroi du véhicule, montrant le montage de principe selon l'invention;
- la figure 3 est une vue schématique en coupe, montrant la bague éclairante et le corps d'allumage une fois montée dans la paroi;
- la figure 4 est une vue analogue à la figure 2 pour un second exemple de réalisation;
- la figure 5 est une vue analogue à la figure 3 pour ce second exemple de réalisation;
- la figure 6 est une vue en bout selon la flèche VI de la figure 5;
- la figure 7 est une vue en coupe selon la ligne VII-VII de la figure 6;
- la figure 8 est une vue en coupe selon la ligne VIII-VIII de la figure 5;
- la figure 9 est une vue schématique en coupe selon la ligne I-I de la figure 6;
- la figure 10 est une vue analogue à la figure 3 pour un troisième exemple de réalisation.

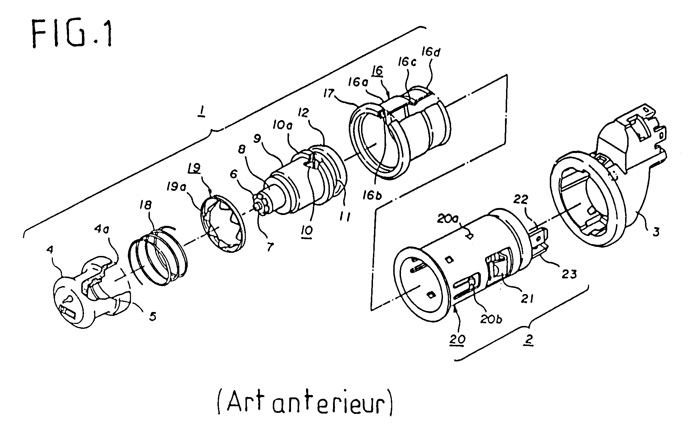

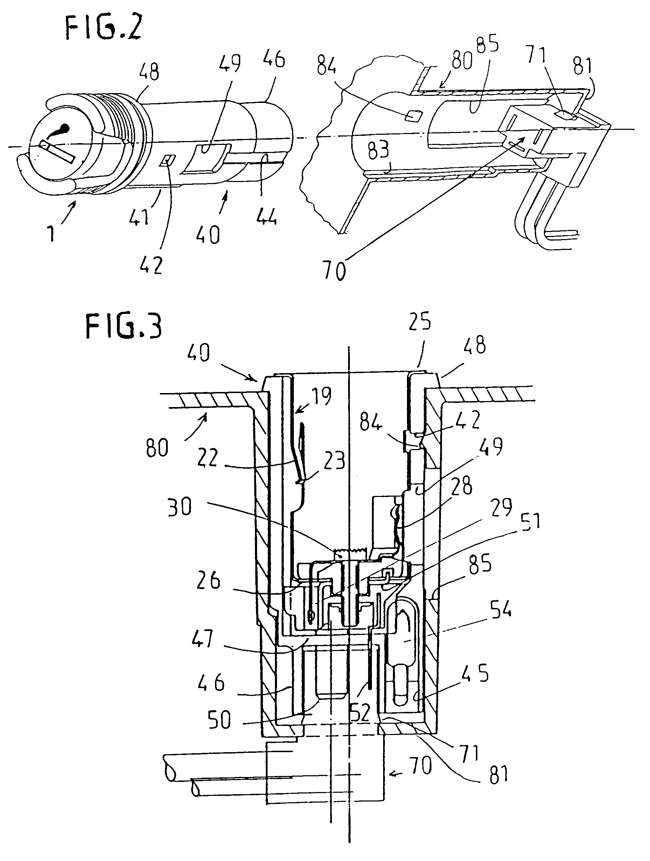

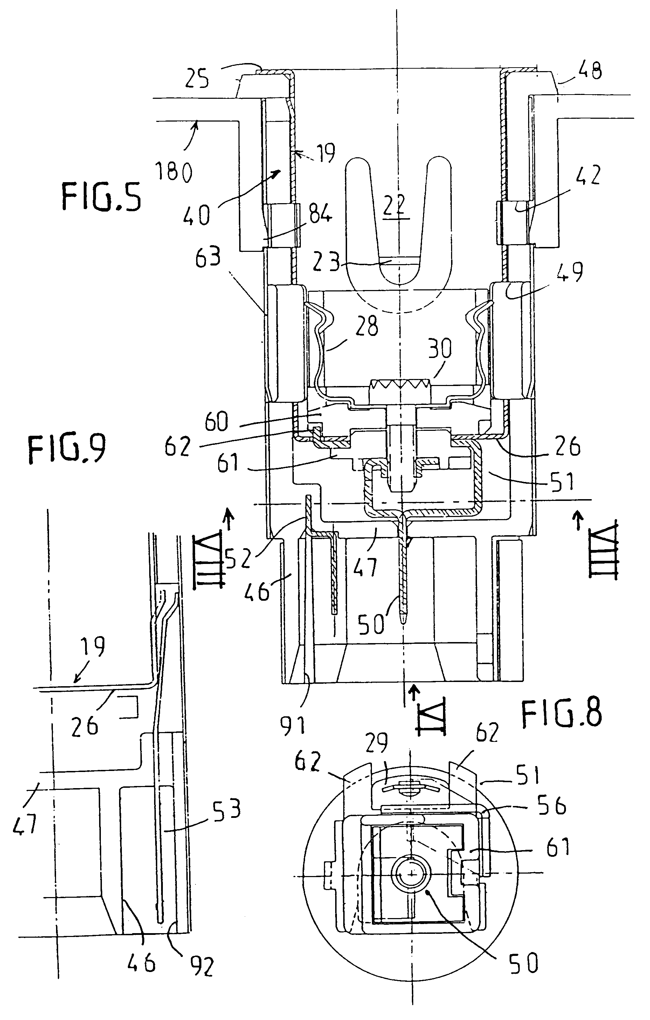

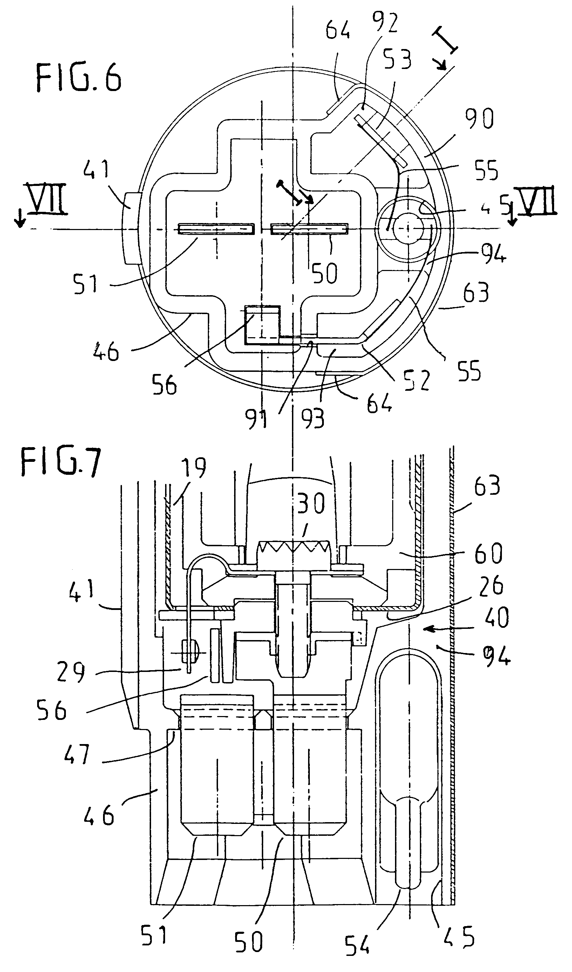

Comme mieux visible à la figure 2, pour formation d'un allume-cigare pour véhicules automobiles, il est mis en oeuvre, de manière connue en soi, un corps d'allumage 19 entouré par une bague conductrice de lumière ou bague éclairante 40 propre à être montée dans une paroi 80 du véhicule automobile.

Le corps d'allumage 19 sert de réceptable au bouchon chauffant 1 et est attelé à la bague 40.

Pour ce faire le corps 19 présente des moyens d'engagement 24, ici sous forme de redents, pour coopération avec des moyens d'engagement complémentaires 24′, ici sous forme de crans, que présente la bague éclairante 40 à cet effet.

La bague 40, en matière plastique translucide et électriquement isolante, présente des moyens de montage 42 pour montage dans la paroi 80 présentant pour cela des moyens de montage complémentaires.

Ces moyens consistent ici en deux ouvertures diamétralement opposées 42 propres à coopérer avec des redents 84 portés par la paroi 80.

Cette bague 40 présente une collerette 48 et ainsi une fois montée par encliquetage, celle-ci est immobilisée en rotation par les redents 84 et en translation dans un sens par les redents 84 et dans l'autre sens par sa collerette 48.

Pour mémoire on rappellera que le corps d'allumage 19 de forme annulaire, ici cylindrique à section circulaire, présente deux languettes 22, à crochets ou crans 23, diamétralement opposées, propres à l'accrochage du bouchon d'allume-cigare 1.

Ce corps 19 est en matériau conducteur, ici métallique.

Il présente un fond 26 troué pour montage, notamment, d'une bague électriquement isolante 61, ainsi qu'une collerette 25 pour coopération à son extrémité libre avec la collerette 48.

Ainsi ce corps 19 est enfilé dans la bague 40 et est immobilisé par celle-ci du fait de la présence des redents 24 et de la collerette 25.

A partir du fond 26 s'érigent axialement des languettes d'alimentation 50 et 51 reliées respectivement à la borne positive et négative de la batterie, le corps 19 étant relié ici à la borne négative de la batterie.

La bague éclairante 40 s'étend au-delà du fond 26 du corps d'allumage 19 et elle présente extérieurement au corps d'allumage 19 une extrémité libre 46,47 formant une première partie d'un dispositif de connexion des languettes 50,51 d'alimentation de l'allume-cigare.

Suivant l'invention, ladite bague 40 forme à cet effet un capot protecteur pour lesdites languettes d'alimentation et ledit corps d'allumage, l'extrémité libre de la bague venant se monter dans une seconde partie 70 complémentaire du connecteur portée par le véhicule.

Plus précisément (figure 3) la bague 40 est de forme tubulaire complémentaire à celle du corps 19 et présente un fond percé 47, pour le passage de languettes d'alimentation 50,51.

Ce fond 47 se prolonge vers l'extérieur, dans l'encombrement radial (ici diamétral) de la bague 40, par une paroi 46 d'orientation axiale propre à coopérer avec une seconde partie 70 complémentaire de connecteur portée par le véhicule pour formation d'un connecteur.

Par commodité l'extrémité de la bague 40 présentant le fond 47 et la paroi 46, formant un trou borgne, sera dénommée extrémité libre par opposition à l'extrémité 48 venant au contact de la paroi 80.

Comme visible à la figure 2, la paroi 80 présente axialement une protubérance creuse, de forme complémentaire à la bague 40, fermée par un fond 81.

Cette protubérance présente deux ouvertures 85 diamétralement opposées et son fond 81 est ouvert pour montage par encliquetage du corps de la seconde partie 70 du connecteur présentant à cet effet des crans 71.

La bague 40 présente deux rainures 44 adaptées aux dimensions des redents 84, lesdites rainures 44 s'étendant de l'extrémité libre de la bague 40 jusqu'à des ouvertures 49 prévues pour dégager le bilame 28 dont est pourvu le corps d'allumage 19. Pour plus de précision, on se reportera au document US-A-4,500,774, sachant que le bilame possède deux lames à crans pour accrochage avec le bouchon chauffant de l'allume-cigare et chauffage de son corps de chauffe.

Cette bague 40 présente également une languette longitudinale 41 pour coopération avec une rainure 83 de la paroi 80.

Ainsi qu'on l'aura compris le fond 47 et la paroi 46 délimitent la première partie du connecteur selon l'invention et il est possible d'assembler la bague 40, le corps d'allumage 19 et le bouchon 1 dans une unité de production, puis de monter cet ensemble unitaire chez le constructeur par simple enfilage axial, les redents 84 et la rainure 83 formant un détrompeur, en sorte que les parties de connexions 46 et 70 se montent automatiquement l'une dans l'autre, la première partie 46, 47 constituant la partie femelle, tandis que la seconde partie 70 constitue la partie mâle.

Ainsi la languette 41 et les rainures 44 constituent des moyens de guidage coopérant avec les moyens de guidage complémentaires de la paroi 80 formés par les redents 84 et la rainure 83.

Grâce à l'invention il devient possible de monter aisément une lampe d'éclairage 54 et suivant une caractéristique importante la bague éclairante 40 présente intérieurement au-delà du fond 26 du corps d'allumage 19 et latéralement par rapport à la première partie de connecteur 46, 47, un logement 45 pour montage de la lampe d'éclairage 45.

Ainsi la lampe 54 est logée à l'intérieur du contour de la bague 40.

Comme visible à la figure 3, ce logement 45 consiste en un trou borgne, ouvert en direction opposée au fond 47 tout comme la paroi 46, et pour son alimentation il est prévu, d'une part, une languette 52 propre à être connectée à la borne positive de la batterie, la partie 70 étant agencée en conséquence (figure 2), et, d'autre part, une languette 53 décrite ci-après en contact avec le corps d'allumage 19 lui-même relié à la masse ou à la borne négative de la batterie par la languette 51.

On notera que le bilame 28 est pourvu d'une languette de sécurité 29, ledit bilame 28 étant porté par le corps d'allumage 19 et assemblé à celui-ci par l'intermédiaire d'un organe de fixation 30 ici une vis à tête crantée pour auto-nettoyage, comme décrit ci-après.

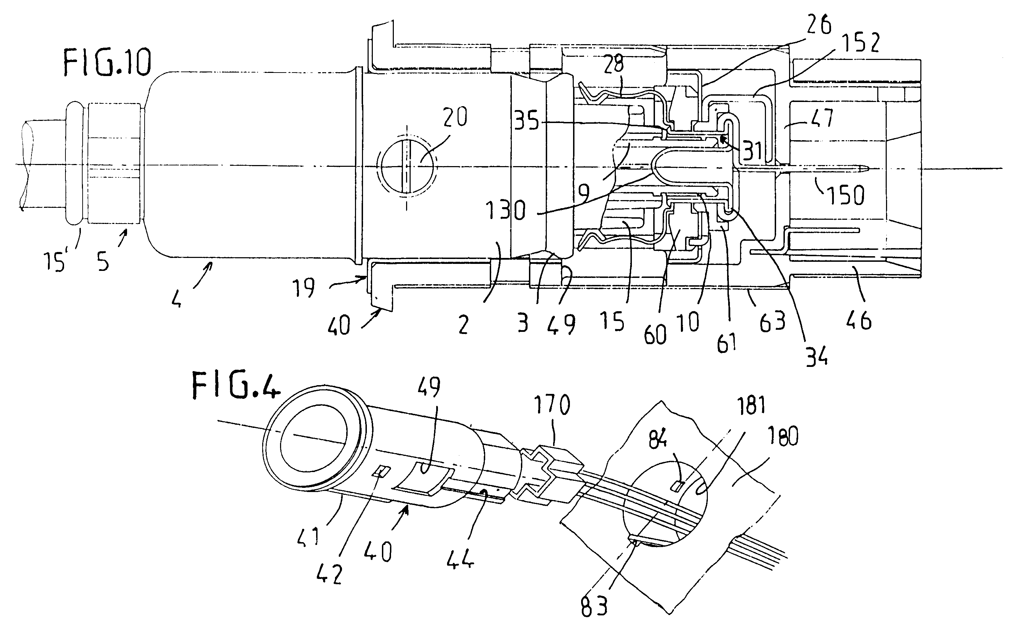

Bien entendu (figure 4) la seconde partie du connecteur 170 peut ne pas être fixée à la paroi 180, celle-ci présentant alors simplement une ouverture 181, à la faveur de laquelle sont formés des redents 84 et la rainure 83.

Dans ce cas, on assemble l'ensemble bague éclairante 40-corps d'allumage 19-bouchon chauffant 1 (non représenté ici par simplification) à la seconde partie 170 du connecteur, puis on enfile le tout dans l'ouverture 181.

Comme mieux visible à la figure 5, cette ouverture 181 est formée à la faveur d'un manchon annulaire d'orientation axiale, les redents 84 étant disposés à l'extrémité dudit manchon.

On notera que la bague 40 est entourée par un carénage 63 de protection.

La languette 50 a une forme tortueuse et présente un trou fileté, comme visible dans les figures 5 et 7 formé dans une partie transversale par rapport à la partie courante de la languette s'étendant axialement et traversant le fond 47 à la faveur d'une ouverture que présente ledit fond. Le trou fileté est propre à recevoir une vis 30 de fixation.

Cette partie transversale est engagée dans une creusure de la bague d'isolement 61, ladite bague 61 portant une partie transversale appartenant à la languette 51 placée côte-à-côte par rapport à la languette 50 (figure 7).

La languette 51 traverse également axialement le fond 47 à la faveur d'une ouverture et elle est traversée par la bague 61.

La partie transversale de la languette 51 est au contact du fond 26 et s'étend à l'extérieur du corps 19.

Sur l'autre face du fond 26 est disposée une seconde bague électriquement isolante 60 portant le bilame 28.

La vis 30, par sa tête, s'appuie sur le bilame 28 et vient serrer l'ensemble 28-60-26-51-61-50 après traversée des pièces 28-60, 61 présentant des ouvertures à cet effet, en sorte que ledit ensemble est solidaire du corps 19 dont le fond 26 est percé à cet effet, la bague 61 pénétrant dans ladite ouverture, comme visible dans les figures 5 et 7.

Le bilame 28 porte une languette de sécurité 29 portant un plot de contact propre à coopérer avec une partie 56 de la languette 51.

Cette languette 29 s'étend axialement en direction opposée du bilame 28 destiné à recevoir le bouchon chauffant 1 enfoncé dans le corps 19, pour chauffage de celui-ci qui est automatiquement éjecté, lorsque la résistance qu'il porte est chaude.

Pour plus de précision sur la constitution du bouchon chauffant 1, on se reportera au susmentionné document US-A-4 500 774.

Comme visible également dans ces figures la paroi 46 entoure les languettes 50, 51 et est ici en forme de croix (figure 6).

Sa section correspondant à une enseigne de pharmacien.

Suivant une caractéristique de l'invention, cette paroi 46 est flanquée latéralement d'une paroi 90 (figure 6) et d'une portion 94 de la bague 40, dans laquelle est formé le logement 45.

Comme visible dans cette figure 6, la paroi 90 se raccorde aux parties supérieures et inférieures de la paroi 46 par des portions de raccordement et elle présente également une portion en forme de secteur circulaire dans le prolongement de la périphérie de la bague 40.

On profite de la paroi 90 pour fixer le carénage 63, prolongé pour cela au niveau de ladite paroi 90, par pliage en 64 (figure 6).

Il y a ainsi formation de deux cavités 92, 93 séparées l'une de l'autre par la portion 94 et délimitées par les parois 46, 90.

On appréciera que la portion 94 constitue une entretoise entre les parois 90, 46 et qu'elle rigidifie avantageusement lesdites parois.

Il en est de même de la paroi 90 qui rigidifie la paroi 46.

Ainsi suivant une caractéristique importante de l'invention, le logement 45 est pratiqué dans une nervure de rigidification de la première partie 46, 47 du connecteur.

La lampe 54 est une lampe longue durée et porte des fils 55 soudés à des languettes d'alimentation 52, 53, la languette 53 s'étend dans la cavité 92 et est connectée au corps 19 comme visible à la figure 9.

Plus précisément cette languette 53, traverse la bague 40 en étant ancrée dans celle-ci. Elle est admise à se déformer lorsque l'on enfonce le corps 19 dans la bague 40, pour être connectée ainsi à la borne négative de la batterie, ce qui simplifie les branchements, suivant un avantage de l'invention.

La languette 52 est pliée et est propre à être reliée par le connecteur 170 à la borne positive de la batterie.

Elle s'étend en partie dans la cavité 93 et traverse par une ouverture 91 la paroi 46 pour se terminer par une portion 56 située dans la partie de connecteur.

Son montage s'effectue par enfilage dans le trou 91 et ancrage dans le fond 47.

On notera que la languette 51 présente deux ailes 62, à extrémité pliée en direction axiale, et que celles-ci servent de détrompeur (figure 8).

Le montage s'effectue de la manière suivante:

On commence par monter la languette 50 en enfilant celle-ci dans le trou du fond 47, puis on place la bague 61 à creusure à contour globalement rectangulaire, puis on monte la languette 51 sur la bague 61 en l'engageant latéralement en la faisant pénétrer dans l'ouverture du fond 47, on monte le corps d'allumage 19, celui-ci étant indexé automatiquement par les languettes 62 qui le guide, puis on monte la bague 60 et le bilame 28, la languette 29 étant alors convenablement positionnée et enfin on effectue la fixation à l'aide de la vis.

Ainsi qu'il ressort à l'évidence de la description, la bague 40 est en matériau électriquement isolant et le fond 47 participe au maintien des languettes 50, 51, ce qui procure de la robustesse à l'allume-cigare.

Tirant parti de cette caractéristique et du rôle protecteur de la bague 40, il devient alors possible (figure 10) de doter l'allume-cigare d'une broche centrale 130 à tête pénétrante.

Cette broche 130 appartient à une pièce 31 en forme de gobelet et elle s'érige à partir du fond de ladite pièce 31 en étant portée par le corps d'allumage 19.

Cette pièce 31 sert de pièces d'assemblage et joue le rôle de la vis 30 des figures précédentes.

Pour ce faire sa partie périphérique d'orientation axiale présente un épaulement 34, réalisé par pliage, et un épaulement de verrouillage 35.

L'épaulement 34 sert d'appui à une patte d'agrafage, que présente la languette 150 reliée à la borne positive.

Sur cette agrafe est montée la bague 61, puis une portion transversale de la languette 152 reliée à la borne négative de la batterie.

Le corps 19 est monté sur la bague 61 puis on enfile la bague 60 et enfin le bilame 28, l'ensemble étant maintenu en place par déformation de l'extrémité libre de la pièce 31 et formation de l'épaulement 35.

On notera que la portion périphérique de la pièce 31 traverse donc les bagues 60, 61 le corps 19 et le bilame 28.

La tête de la broche centrale fait légèrement saillie axialement par rapport à l'épaulement 35 et au plan du bilame 28.

La broche 130 s'étend donc globalement vers l'extérieur du corps 19 en étant protégée par la bague 40 et soutenue par le fond 47.

Il y a ainsi formation d'un puits, il devient possible d'emmancher sur la broche 130, une broche 9 d'une fiche auxiliaire pour alimenter un accessoire ou un appareil électrique.

Cette prise comporte un corps isolant 4, en deux demi-coquilles, avec une queue 15' et un nez 15 de diamètre réduit.

Les deux demi-coquilles sont maintenues ensemble par un collier de serrage élastique 5 implanté au niveau de la queue 15' et par un premier élément conducteur 2 enveloppant ledit corps.

Cet élément 2 présente un rebord d'accrochage 3 propre à coopérer avec les languettes 22.

Il est relié à l'un des câbles d'alimentation par un dé de raccordement dont seule la vis de fixation 20 est visible.

Cette fiche présente une broche 9 élastiquement déformable en étant ici fractionnée en mâchoires par des fentes.

Sur cette broche 9 est monté un anneau de serrage 10 fendu à la faveur d'une gorge que présente ladite broche. La broche 9 s'enfile à serrage sur la broche 130.

Ainsi qu'on l'aura compris la taille de l'alésage interne de la broche 9 est fonction de celui de la broche 130 en sorte qu'un contact intime et énergique aient lieu entre lesdites broches. Ce contact étant favorisé par l'anneau 10.

Grâce à cette disposition un passage de courant de forte intensité est rendu possible.

Bien entendu la présente invention n'est pas limitée aux exemples de réalisation décrits.

En particulier les moyens de montage 42, 84 et les moyens de guidage 83, 41, 44, 84 peuvent être différents, et on peut inverser les structures.

Par exemple les rainures 44 peuvent appartenir à la paroi 80, 180, la bague 40 portant alors deux nervures pour coopération avec lesdites rainures 44, chaque nervure étant dotée d'un redent 84 propre à coopérer avec un trou correspondant pratiqué dans la rainure de la paroi.

De même, on peut inverser la structure des moyens d'engagement, le corps 19 présentant des trous, éventuellement échelonnés axialement, pour coopération avec des saillies portées intérieurement par la bague 40.

La broche 130 peut être pleine et être rapportée sur le fond de la pièce 131.

La broche 130 peut être distincte de la pièce 131, se réduisant alors à un simple rivet fixant les pièces 150, 61, 152, 60 et 28 au fond 26.

Cette broche à tête pénétrante, en forme d'ogive, de demi-olives ou tronconique, peut être alors rapportée sur le fond 47 et être reliée à la languette 150.

Cette broche est alors disposée à l'intérieur d'un puits délimité par ladite pièce 131.

Bien entendu le corps 19 et la bague 40, de forme complémentaire, peuvent être cylindriques à section carrée.

## Revendications

1. Allume-cigare, notamment pour véhicules automobiles, du genre comportant un corps d'allumage (19) monté à l'intérieur d'une bague éclairante (40) électriquement isolante par l'intermédiaire de laquelle le corps d'allumage (19) est propre à être fixé à une paroi, dans lequel, d'une part, ledit corps (19) présente un fond (26) à partir duquel s'érigent axialement en saillie des languettes d'alimentation (50,51;150,151) pour alimentation de l'allume-cigare et, d'autre part, la bague éclairante (40) s'étend au-delà du fond (26) du corps d'allumage (19), caractérisé en ce que la bague éclairante (40) présente extérieurement au corps d'allumage (19), une extrémité libre (46,47) formant une première partie d'un dispositif de connexion desdites languettes d'alimentation de l'allume-cigare, ladite bague (40) formant à cet effet un capot protecteur pour lesdites languettes d'alimentation et ledit corps d' allumage, l'extrémité libre (46,47) de la bague étant propre à coopérer avec la deuxième partie (70) complémentaire du dispositif de connexion.

2. Allume-cigare selon la revendication 1, caractérisé en ce que ladite première partie du dispositif de connexion est délimitée, d'une part, par un fond (47) traversé par lesdites languettes d'alimentation, et, d'autre part, par une paroi (46) d'orientation axiale prolongeant, dans l'encombrement radial de la bague (40), vers l'extérieur le fond (47), ladite paroi (46) entourant lesdites languettes d'alimentation et étant propre à coopérer avec ladite deuxième partie (70) complémentaire du dispositif de connexion.

3. Allume-cigare selon l'une quelconque des revendications précédentes, caractérisé en ce que la bague éclairante (40) est dotée de moyens de guidage (44,41) pour coopération avec des moyens de guidage complémentaires (84,83) portés par la paroi (80;180) du véhicule.

4. Allume-cigare selon la revendication 3, caractérisé en ce que les moyens de guidage (44,41) comportent, d'une part, deux rainures (44) s'étendant de l'extrémité libre de la bague (40) jusqu'à des ouvertures (49) prévues dans la bague pour dégager un bilame (28) dont est pourvu le corps d'allumage (19), et, d'autre part, d'une languette longitudinale (41).

5. Allume-cigare selon l'une quelconque des revendications précédentes, caractérisé en ce que la bague éclairante (40) présente, intérieurement au-delà du fond (26) du corps d'allumage (19) et latéralement par rapport à ladite première partie (46,47) du dispositif de connexion, un logement (45) ouvert pour le montage d'une lampe d'éclairage (54) logée à l'intérieur du contour de la bague (40).

6. Allume-cigare selon la revendication 5, caractérisé en ce que le logement (45) est pratiqué dans une nervure (94) de rigidification de la première partie (46,47) du dispositif de connexion formant entretoise entre la paroi d'orientation axiale (46) de la première partie du dispositif de connexion de l'allume-cigare et une deuxième paroi (90) flanquant latéralement ladite paroi d'orientation axiale (46), ladite deuxième paroi (90) présentant une portion dans le prolongement de la périphérie de ladite bague (40).

7. Allume-cigare selon la revendication 6, caractérisé en ce que deux cavités (92,93), séparées l'une de l'autre par ladite nervure (94), sont délimitées par lesdites parois (46,90), pour réception chacune d'une languette d'alimentation (52,53) reliée par des fils (55) à la lampe (54).

8. Allume-cigare selon la revendication 7, caractérisé en ce que l'une des languettes traverse à ancrage la bague éclairante (40), pour coopérer par déformation avec le corps d'allumage (19), tandis que l'autre languette (52) traverse par une ouverture (91) la paroi (46) de la première partie du dispositif de connexion pour se terminer par une portion (56) terminale située dans la première partie du dispositif de connexion.

9. Allume-cigare selon la revendication 2 ou 8, caractérisé en ce que ladite paroi d'orientation axiale (46) est en forme de croix et entoure, d'une part, deux languettes (50,51) traversant ledit fond en étant placées côte-à-côte, l'une des languettes (50) étant reliée par un organe de fixation (30) au bilame (28) dont est pourvu le corps d'allumage (19), tandis que l'autre (51) est en contact avec le corps d'allumage (19) et, d'autre part, la portion terminale (56) de la languette d'alimentation (52) de la lampe (54).

10. Allume-cigare selon l'une quelconque des revendications précédentes, caractérisé en ce que la bague éclairante (40) entoure une broche centrale (130) à tête pénétrante portée par le corps d'allumage (19) et propre à coopérer avec une broche élastique (9) d'une fiche auxiliaire.

## Claims

1. Cigar lighter, notably for motor vehicles, of the type comprising a lighter body (19) mounted inside an electrically insulating illuminating ring (40), by means of which the lighter body (19) is suitable for being fixed to a wall, in which, firstly, the said body (19) has a bottom (26) from which power supply lugs (50, 51; 150, 151) for supplying the cigar lighter stand out axially so as to project and, secondly, the illuminating ring (40) extends beyond the bottom (26) of the lighter body (19), characterised in that the illuminating ring (40) has, outside the lighter body (19), a free end (46, 47) forming a first part of a connection device for the said power supply lugs for the cigar lighter, the said ring (40) forming for this purpose a protective cap for the said power supply lugs and the said lighter body, the free end (46, 47) of the ring being suitable for cooperating with the second, complementary part (70) of the connection device.

2. Cigar lighter according to Claim 1, characterised in that the said first part of the connection device is defined, firstly, by a bottom (47) through which the said power supply lugs pass and, secondly, by an axially oriented wall (46), extending the bottom (47) outwards within the radial space of the ring (40), the said wall (46) surrounding the said power supply lugs and being suitable for cooperating with the said second complementary part (70) of the connection device.

3. Cigar lighter according to any one of the preceding claims, characterised in that the illuminating ring (40) is provided with guide means (44, 41) for cooperating with complementary guide means (84, 83) borne by the wall (80; 180) of the vehicle.

4. Cigar lighter according to Claim 3, characterised in that the guide means (44, 41) include, firstly, two grooves (44) extending from the free end of the ring (40) as far as openings (49) provided in the ring for releasing a bimetallic strip (28) with which the lighter body (19) is provided and, secondly, a longitudinal lug (41).

5. Cigar lighter according to any one of the preceding claims, characterised in that the illuminating ring (40) has, on the inside and beyond the bottom (26) of the lighter body (19) and laterally with respect to the said first part (46, 47) of the connection device, an open housing (45) for fitting an illumination lamp (54) housed inside the contour of the ring (40).

6. Cigar lighter according to Claim 5, characterised in that the housing (45) is formed in a stiffening rib (94) on the first part (46, 47) of the connection device forming a brace between the axial orientation wall (46) of the first part of the connection device of the cigar lighter and a second wall (90) laterally flanking the said axially orientated wall (46), the said second wall (90) having a portion in line with the periphery of the said ring (40).

7. Cigar lighter according to Claim 6, characterised in that two cavities (92, 93), separated from each other by the said rib (94), are defined by the said walls (46, 90), for receiving in each case a power supply lug (52, 53) connected by wires (55) to the lamp (54).

8. Cigar lighter according to Claim 7, characterised in that one of the lugs passes through the illuminating ring (40) so as to anchor it, to cooperate by deformation with the lighter body (19), while the other lug (52) passes, through an opening (91), through the wall (46) of the first part of the connection device, to end in an end portion (56) situated in the first part of the connection device.

9. Cigar lighter according to claim 2 or 8, characterised in that the said axially orientated wall (46) is cross shaped and surrounds, firstly, two lugs (50, 51) passing through the said bottom while being placed side by side, one of the lugs (50) being connected by means of a fixing member (30) to the bimetallic strip (28) with which the lighter body (19) is provided, while the other (51) is in contact with the lighter body (19) and, secondly, the end portion (56) of the power supply lug (52) of the lamp (54).

10. Cigar lighter according to any one of the preceding claims, characterised in that the illuminating ring (40) surrounds a central pin (130) with a penetrating head, borne by the lighter body (19) and suitable for cooperating with an elastic pin (9) of an auxiliary plug.

## Patentansprüche

1. Zigarrenanzünder, insbesondere für Kraftfahrzeuge, in der Ausführung mit einem Anzündkörper (19), der in Innern eines elektrisch nichtleitenden Leuchtrings (40) eingebaut ist, durch den der Anzündkörper (19) an einer Wand befestigt werden kann, wobei einerseits der besagte Körper (19) einen Boden (26) aufweist, von dem aus sich axial vorspringend Stromzuleitungszungen (50, 51; 150, 151) für die Stromversorgung des Zigarrenanzünders erstrecken, und wobei sich andererseits dar Leuchtring (40) über den Boden (26) des Anzündkörpers (19) hinaus erstreckt , **dadurch gekennzeichnet,** daß dar Leuchtring (40) außerhalb des Anzündkörpers (19) angeordnet ist, wobei ein freies Ende (46, 47) einen ersten Teil einer Anschlußvorrichtung für die besagten Stromzuleitungszungen des Zigarrenanzünders bildet, wobei der besagte Leuchtring (40) zu diesem Zweck eine Schutzkappe für die besagten Stromzuleitungszungen und den besagten Anzündkörper umfaßt und wobei das freie Ende (46, 47) des Leuchtrings mit einem dazu passenden zweiten Teil (70) der Anschlußvorrichtung zusammenwirken kann.

2. Zigarrenanzünder nach Anspruch 1 , **dadurch gekennzeichnet,** daß der besagte erste Teil der Anschlußvorrichtung einerseits durch einen Boden (47), durch den die besagten Stromzuleitungszungen hindurchgehen, und andererseits durch eine axial ausgerichtete Wand (46) begrenzt wird, die innerhalb der radialen Außenabmessung des Leuchtrings (40) den Boden (47) nach außen verlängert, wobei die besagte Wand (46) die besagten Stromzuleitungszungen umgibt und mit dem besagten dazu passenden zweiten Teil (70) der Anschlußvorrichtung zusammenwirken kann.

3. Zigarrenanzünder nach einem der vorangehenden Ansprüche, **dadurch gekennzeichnet**, daß der Leuchtring (40) mit Führungsmitteln (44, 41) für das Zusammenwirken mit dazu passenden Führungsmitteln (84, 83) versehen ist, die an der Wand (80; 180) des Fahrzeugs angebracht sind.

4. Zigarrenanzünder nach Anspruch 3 , **dadurch gekennzeichnet,** daß die Führungsmittel (44, 41) einerseits zwei Nuten (44) umfassen, die sich vom freien Ende des Leuchtrings (40) bis zu Öffnungen (49) erstrecken, die im Leuchtring vorgesehen sind, um einen Bimetallstreifen (28) freizulegen, mit dem der Anzündkörper (19) versehen ist, und andererseits eine Längszunge (41).

5. Zigarrenanzünder nach einem der vorangehenden Ansprüche, **dadurch gekennzeichnet**, daß der Leuchtring (40) innen hinter dem Boden (26) des Anzündkörpers (19) und seitlich im Verhältnis zu dem besagten ersten Teil (46, 47) der Anschlußvorrichtung eine offene Aufnahme (45) für den Einbau einer Beleuchtungslampe (54) aufweist, die im Innern des Umfangs des Leuchtrings (40) eingesetzt ist.

6. Zigarrenanzünder nach Anspruch 5 , **dadurch gekennzeichnet,** daß die Aufnahme (45) in einer Versteifungsrippe (94) des ersten Teils (46, 47) der Anschlußvorrichtung eingearbeitet ist, die eine Zwischenstrebe zwischen der axial ausgerichteten Wand (46) des ersten Teils der Anschlußvorrichtung des Zigarrenanzünders und einer zweiten Wand (90) bildet, welche seitlich neben der besagten axial ausgerichteten Wand (46) angeordnet ist, wobei die besagte zweite Wand (90) einen Abschnitt in der Verlängerung der Peripherie des besagten Leuchtrings (40) aufweist.

7. Zigarrenanzünder nach Anspruch 6 , **dadurch gekennzeichnet,** daß zwei durch die besagte Rippe (94) voneinander getrennte Hohlräume (92, 93) durch die besagten Wände (46, 90) begrenzt sind, um jeweils eine Stromzuleitungszunge (52, 53) aufzunehmen, die durch Drähte (55) mit der Lampe (54) verbunden ist.

8. Zigarrenanzünder nach Anspruch 7 , **dadurch gekennzeichnet,** daß eine der Zungen mit Verankerung durch den Leuchtring (40) hindurchgeht, um durch Verformung mit dem Anzündkörper (19) zusammenzuwirken, während die andere Zunge (52) durch eine Öffnung (91) der Wand (46) des ersten Teils der Anschlußvorrichtung hindurchgeht, um in einem Endabschnitt (56) zu enden, der im ersten Teil der Anschlußvorrichtung angeordnet ist.

9. Zigarrenanzünder nach Anspruch 2 oder 8 , **dadurch gekennzeichnet,** daß die besagte axial ausgerichtete Wand (46) kreuzförmig ausgebildet ist und einerseits zwei Zungen (50, 51) umgibt, die durch den besagen Boden hindurchgehen, wobei sie nebeneinander angeordnet sind und eine der Zungen (50) durch ein Befestigungsorgan (30) mit dem am Anzündkörper (19) vorgesehenen Bimetallstreifen (28) verbunden ist, während die andere (51) mit dem Anzündkörper (19) in Kontakt steht, und andererseits den Endabschnitt (54) der Stromzuleitungszunge (52) der Lampe (54).

10. Zigarrenanzünder nach einem der vorangehenden Ansprüche, **dadurch gekennzeichnet**, daß der Leuchtring (40) einen mittigen Stift (130) mit Durchdringungskopf umgibt, der am Anzündkörper (19) angeordnet ist und mit einen elastischen Stift (9) eines Hilfssteckers zusammenwirken kann.
